Europäisches Patentamt

European Patent Office

Office européen des brevets

(19)

(11) Numéro de publication : **0 362 748 B1**

(12) **FASCICULE DE BREVET EUROPEEN**

(45) Date de publication du fascicule du brevet :
02.09.92 Bulletin 92/36

(51) Int. Cl.⁵ : **B60C 15/02, B60C 15/024**

(21) Numéro de dépôt : **89118187.7**

(22) Date de dépôt : **30.09.89**

(54) **Bourrelet de pneumatique.**

(30) Priorité : **05.10.88 FR 8813148**

(43) Date de publication de la demande :
**11.04.90 Bulletin 90/15**

(45) Mention de la délivrance du brevet :
**02.09.92 Bulletin 92/36**

(84) Etats contractants désignés :
**AT BE CH DE ES FR GB GR IT LI LU NL SE**

(56) Documents cités :
**EP-A- 0 152 567**
**EP-A- 0 153 295**
**EP-A- 0 212 333**
**DE-A- 3 605 803**

(56) Documents cités :
**PATENT ABSTRACTS OF JAPAN, vol. 8, no. 280 (M-347)[1717], 21 décembre 1984, page 66 M 347; & JP-A-59 149 802 (SUMITOMOGOMU KOGYO K.K.) 27-08-1984**

(73) Titulaire : **COMPAGNIE GENERALE DES ETABLISSEMENTS MICHELIN - MICHELIN & CIE**
**12, Cours Sablon**
**F-63040 Clermont-Ferrand Cédex (FR)**

(72) Inventeur : **Durif, Pierre**
**Chemin de Pedoux - Enval**
**F-63530 Volvic (FR)**

(74) Mandataire : **Bauvir, Jacques et al**
**Michelin & Cie Service K. Brevets**
**F-63040 Clermont-Ferrand Cédex (FR)**

## Description

La présente invention concerne les bourrelets de ceux des pneumatiques qui prennent appui radialement par l'intérieur sur la jante, dits pneumatiques à accrochage inversé.

Les jantes, conçues pour recevoir de tels pneumatiques comportent, de chaque côté, un siège, usuellement incliné légèrement par rapport à l'axe de la jante. Le siège est prolongé axialement vers l'extérieur par un rebord sensiblement perpendiculaire à l'axe et s'étendant radialement vers l'intérieur de la jante. Afin d'assurer un positionnement correct du pneumatique sur la jante, garantissant un bon équilibrage statique et dynamique, le pneumatique doit être en appui régulier aussi bien sur le siège que contre le rebord. Autrement dit, la pression de contact jante-pneumatique doit être constante circonférentiellement.

Le bourrelet des pneumatiques à accrochage inversé comporte en général un grand volume de caoutchouc, ce qui a pour conséquence une grande dispersion du positionnement de la tringle. Si l'on ajoute à cela l'influence des dispersions provoquées par les tolérances de fabrication des jantes et des tringles, ainsi que les tolérances de moulage du bourrelet, il en résulte que, en position de montage, le rapport de l'épaisseur de caoutchouc compris entre la tringle et la face du bourrelet destinée à être appuyée sur la jante, ladite épaisseur étant divisée par la longueur de l'espace disponible entre la tringle considérée comme centrée idéalement et la surface de la jante varie dans des proportions importantes. Or ce rapport détermine le serrage du bourrelet sur la jante. Les variations de ce rapport sont bien souvent plus importantes que les tolérances que l'on voudrait pouvoir respecter pour ce serrage.

Dès lors, on ne peut pas garantir que le serrage sera supérieur à zéro. En conséquence, la tringle se décentre par rapport à la jante et/ou ne se dispose pas de manière plane, et/ou se dispose de façon non parallèle au rebord.

Si l'on choisit un ajustement qui garantisse l'existence d'un serrage, alors, compte tenu de la trop grande tolérance de ce serrage, il ne sera pas possible de monter certains pneumatiques (serrage obtenu trop important).

L'objectif de la présente invention est donc de positionner le bourrelet sur la jante de manière aussi précise que possible.

Le pneumatique selon l'invention, du type à accrochage inversé, comportant une bande de roulement, deux flancs se terminant chacun par un bourrelet, chaque bourrelet comprenant au moins une tringle, ledit bourrelet prenant appui sur le siège de la jante, ledit siège étant limité du côté axialement extérieur par un rebord de jante, est caractérisé en ce que, en position de montage et du côté axialement extérieur à un plan perpendiculaire à l'axe de rotation et tangent à la tringle du coté axialement intérieur de celle-ci, la surface correspondant à un contact effectif du bourrelet sur le siège est inférieure à la surface dudit siège comprise entre ledit plan et ledit rebord.

L'invention est illustrée au moyen des figures suivantes qui représentent :
- la figure 1 un pneumatique en position de moulage, ainsi que la jante sur laquelle il doit se monter.
- la figure 2 le même pneumatique en position de montage sur une jante,
- la figure 3 une vue partielle de profil du bourrelet.

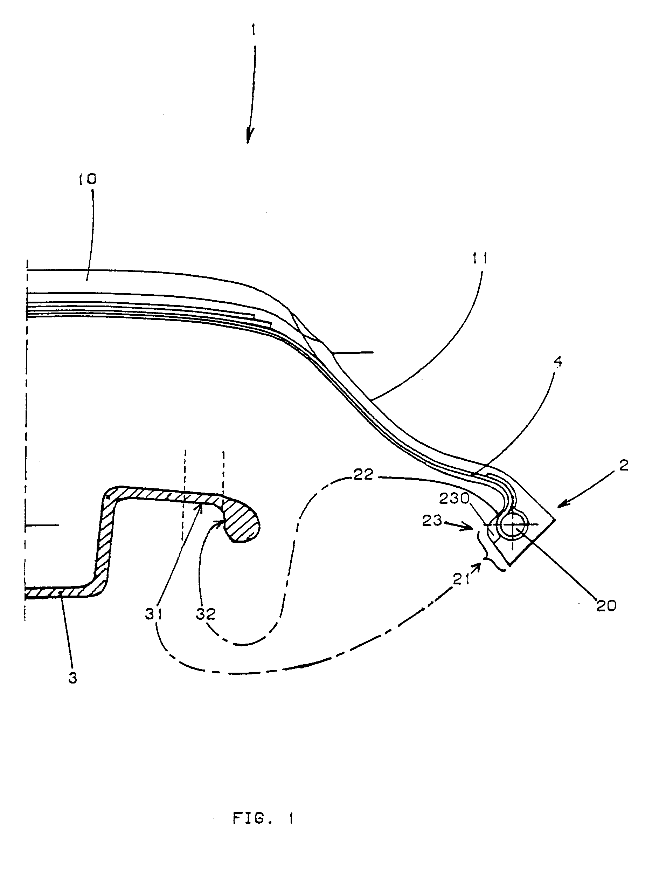

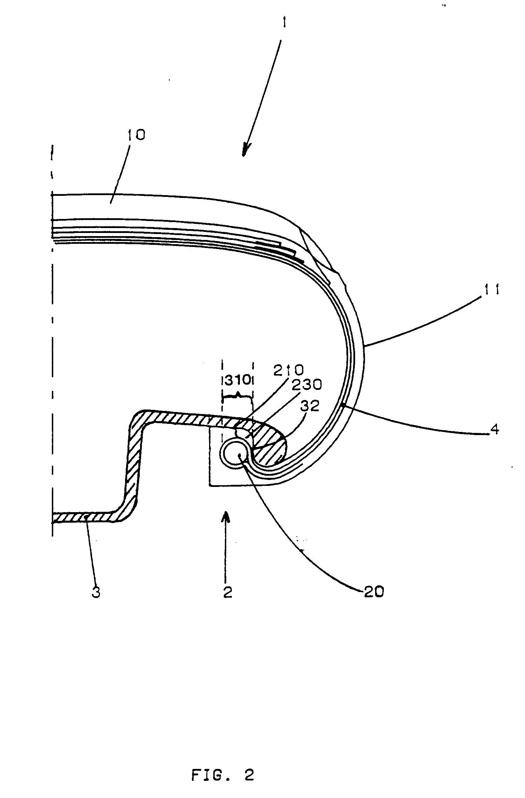

Le pneumatique 1 à accrochage inversé, dont on voit une moitié axiale aux figures 1 et 2, comporte une bande de roulement 10, deux flancs 11 et deux bourrelets 2. Le bourrelet 2 de ce type de pneumatique 1 prend appui sur le siège 31 de la jante 3 par une face de contact 21 qui est, en position de montage, disposée radialement à l'extérieur de la tringle 20. Il prend appui axialement sur le rebord 32 de la jante, situé axialement du côté extérieur de la tringle 20.

La position dans laquelle la vulcanisation est effectuée est usuellement celle visible à la figure 1, où l'on voit que le bourrelet 2 est, par rapport à la position de montage visible à la figure 2, basculé d'un angle important (approximativement 130°). Cet écart aggrave l'influence des tolérances de fabrication de la tringle 20 et de la jante 3 et de l'erreur de positionnement de la tringle 20 à l'intérieur du bourrelet 2 sur le serrage du bourrelet 2 sur la jante 3. De plus, dans ce type de pneumatique 1, la tringle 20 est sollicitée en compression, alors que dans les pneumatiques à accrochage par l'extérieur de la jante, la tringle est sollicitée en traction. Tout ceci rend ce pneumatique 1 plus sensible aux imprécisions de positionnement de la tringle 20.

Chaque bourrelet 2 prend appui sur la jante 3 par une face de contact 21, dont la projection radiale (pneumatique considéré en position de montage) sur la jante 3 définit le siège 31. Il prend également appui sur le rebord 32 de la jante 3 par une portée 22 sensiblement perpendiculaire à la face de contact 21.

La pression de contact du bourrelet 2 sur le siège 31 semble être un paramètre important pour la bonne tenue du pneumatique 1. Elle doit être suffisante pour assurer un centrage correct du pneumatique 1 par rapport à la jante 3, et non excessive pour assurer un montage correct, tringle 20 bien parallèle au rebord 32 jouant un rôle du butée mécanique. A cette fin, du côté axialement extérieur à un plan perpendiculaire à l'axe de rotation et tangent à la tringle 20 du côté axialement intérieur de celle-ci, la surface 210 correspondant à un contact effectif du bourrelet 2 sur le siège 31 est inférieure à la surface 310 dudit siège 31 comprise entre ledit plan tangent et ledit rebord 32. C'est en effet cette zone qui influence de façon déterminante le serrage du bourrelet 2 sur la jante 3. Par exemple, on obtient cette réduction du contact effectif en disposant au moins une rainure périphérique continue sur la face de contact 21. On peut définir ainsi un taux d'entaillement, notion comparable à celle utilisée pour les sculptures de bandes de roulement. De cette façon, on peut obtenir des pressions de contact suffisantes, apparaissant au montage, sur une surface réduite, ce qui ne porte pas préjudice à la facilité de montage, contrairement à une pression équivalente, ou même légèrement moindre, répartie sur toute la surface du siège 31.

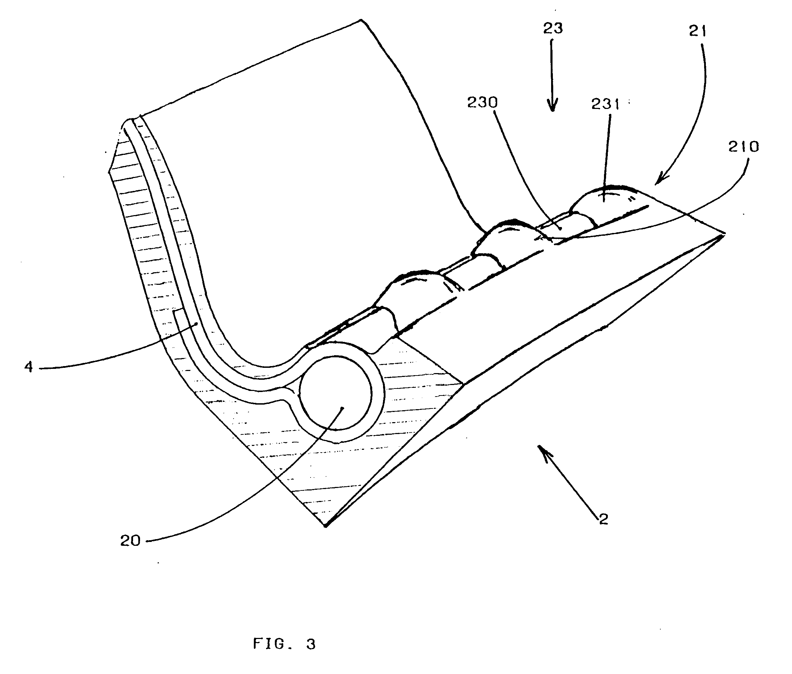

Afin de mieux maîtriser encore les pressions de contacts engendrées par le serrage, on assure un positionnement plus rigoureux de la tringle 20 en prévoyant, à la surface du moyen utilisé pour le moulage de la face 21 du bourrelet 2, une pluralité d'ergots faisant saillie à l'intérieur du bourrelet, jusqu'au contact, ou quasi jusqu'au contact avec la nappe de carcasse 4 entourant la tringle 20. De cette façon, le caoutchouc qui, au cours de la vulcanisation, passe par un stade visqueux avant la solidification, a moins d'influence sur le positionnement de la tringle 20 puisque celle-ci se trouve maintenue par des matériaux peu ou pas déformables : la nappe de carcasse 4 qui peut être considérée comme indéformable en pincement ou en traction dans le sens de l'âme des fils qui la constituent et lesdits ergots, agissant sur la tringle 20 par l'intermédiaire de la nappe de carcasse 4. La zone 23 du bourrelet 2, correspondant à l'intersection du siège 31 et du rebord 32 de la jante, présente une pluralité d'évidements 230 répartis sur la circonférence, et séparés par des bossages 231, lesdits évidements 230 s'étendant jusqu'à la carcasse 4 à l'endroit où elle entoure la tringle 20. La section du bourrelet n'est donc pas identique sur toute circonférence. Ceci apparaît bien à la figure 3. On trouve une succession de sections présentant un évidement 230 et de sections pleines. De cette façon, on atteint un positionnement très précis de la tringle sans amoindrir de façon trop importante la face de contact 21 sur le siège 31. On concilie ainsi les impératifs de volume du bourrelet 2, de tolérances de serrage larges, de positionnement précis du bourrelet 2 sur son siège.

A la consultation de la figure 3, il apparaît bien que la surface correspondante à un contact effectif du bourrelet 2 sur le siège 31 est constitué par une portée de largeur circonférentiellement constante, à laquelle est ajoutée une portée à l'extrémité de chaque bossage 231. Le taux d'entaillement (par analogie avec les sculptures des bandes de roulement) souhaitable est compris entre 30% et 70%, en considérant la partie de la face 21 axialement extérieure au plan tangent à la tringle 20 du côté axialement intérieur de celle-ci.

## Revendications

1. Pneumatique (1) du type à accrochage inversé, comportant une bande de roulement (10), deux flancs (11) se terminant chacun par un bourrelet (2), chaque bourrelet comprenant au moins une tringle (20), ledit bourrelet (2) prenant appui sur le siège (31) de la jante (2), ledit siège (31) étant limité du côté axialement extérieur par un rebord (32) de jante, caractérisé en ce que, en position de montage et du côté axialement extérieur à un plan perpendiculaire à l'axe de rotation et tangent à la tringle (20) du côté axialement intérieur de celle-ci, la surface (210) correspondant à un contact effectif du bourrelet (2) sur le siège (31) est inférieure à la surface (310) dudit siège (31) comprise entre ledit plan et ledit rebord (32).

2. Pneumatique selon la revendication 1, caractérisé en ce que, dans la zone (23) du bourrelet (2) correspondant à l'intersection du siège (31) et du rebord (32) de jante (3), ledit bourrelet (2) présente une pluralité d'évidements répartis sur la circonférence, lesdits évidements (230) s'étendant jusqu'à la carcasse (4) à l'endroit où elle entoure la tringle (20).

3. Pneumatique selon l'une des revendications 1 ou 2, caractérisé en ce que le taux d'entaillement, en considérant la partie de la face 21 axialement extérieure au plan tangent à la tringle 20 du côté axialement intérieur de celle-ci, est compris entre 30 % et 70 %.

## Patentansprüche

1. Luftreifen (1) vom das Felgenhorn umgreifenden Typ mit einem Laufstreifen (10) und zwei Flanken (11), die jeweils in einem Wulst (2) enden, wobei jeder Wulst (2) mindestens einen Wulstkern (20) aufweist und auf dem Sitz (31) der Felge (3) aufliegt und der Sitz (31) auf der axial äußeren Seite vom Felgenhorn (32) der Felge begrenzt ist,
   **dadurch gekennzeichnet**, daß
   die einen wirksamen Kontakt des Wulstes (2) mit dem Sitz (31) entsprechende Oberfläche (210) bei montiertem Reifen axial außerhalb einer zur Drehachse senkrechten und den Wulstkern (20) auf seiner axial inneren Seite berührenden Ebene kleiner ist als die Oberfläche (310) des Sitzes (31) zwischen dieser Ebene und dem Felgenhorn (32).

2. Luftreifen nach Anspruch 1, dadurch gekennzeichnet, daß der dem Schnittbereich des Sitzes (31) und des Felgenhorns (32) der Felge (3) entsprechende Bereich (23) des Wulstes (2) eine Vielzahl von auf dem Umfang verteilten Außnehmungen (230) aufweist, die sich dort bis zur Karkasse (4) erstrecken, wo sie den Wulstkern (20) umgibt.

3. Luftreifen nach Anspruch 1 oder 2, dadurch gekennzeichnet, daß der Ausnehmungsgrad, bezogen auf den axial außerhalb der den Wulstkern (20) axial auf der Innenseite berührenden Ebene liegenden Teil der Fläche (21), zwischen 30 und 70 % beträgt.

## Claims

1. A reverse bead type tire (1), comprising a tread (10), two sidewalls (11) and a bead (2) formed at an edge of each of said sidewalls, each said bead having a bead wire (20) embedded therein, and having a contact face which seats on a seat (31) of a wheel rim (3), said seat (31) being limited on the outside side by a flange (32), characterized by the fact that when said tire is mounted on a rim, the surface area (210) of actual contact of said bead (2) on the seat (31) is less than a surface (310) area of the seat (31) between the flange (32) and a plane perpendicular to the rotational axis of the wheel and tangent to an axially inside point of said bead wire (20).

2. The tire of Claim 1, characterized by the fact that the configuration of said bead (2) comprises multiple circumferentially spaced recesses (230) in a portion (23) of said bead (2) corresponding to the intersection of the seat (31) and the flange (32) of the rim (3), said recesses (230) extend substantially to the casing (4) surranding the bead wire (20).

3. The tire of Claim 1 or 2, characterized to the fact that the configuration of said bead is such that between 30% and 70% of a portion of said contact face which is axially outside of said plane does not contact the seat when said tire is mounted on the wheel.

FIG. 1

FIG. 2

FIG. 3